# EUROPEAN PATENT APPLICATION

(11) **EP 4 672 513 A1**
(43) Date of publication of application: **31.12.2025**
(21) Application number: 24759468.2
(22) Date of filing: 23.01.2024
(51) Int. Cl.: H01R 13/639, H01R 13/52, H01R 13/629, H01R 13/66, B60L 53/16

(54) **DOUBLE-LOCKING-BAR ELECTRONIC LOCK**

(30) Priority: 20.02.2023 CN 202310132744
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2024/073576
(87) International publication number: WO 2024/174790

(57) **Abstract**

Disclosed in the present disclosure is a double-lock-rod electronic lock, including a driving unit, a transmission mechanism, a first locking rod and a second locking rod; an output end of the driving unit is connected to an input end of the transmission mechanism; the transmission mechanism includes a fixed shaft and a swing arm assembly rotatably connected around the fixed shaft, and the driving unit drives the swing arm assembly to perform reciprocating rotational swing; the swing arm assembly includes a first swing arm and a second swing arm which are oppositely disposed, the first swing arm is connected to the first locking rod, and the second swing arm is connected to the second locking rod; and the transmission mechanism is configured to be driven by the driving unit to cause the first locking rod and the second locking rod to move in opposite directions along their respective predetermined movement paths. The double-lock-rod electronic lock of the present disclosure adopts an electronic lock structure of a "one-drives-two" mode, and by means of the integrated design of double locking rods, enables both an AC charging end and a DC charging end of a charging socket to have a locking function while having very small impact on the size of the charging socket; and meanwhile, emergency unlocking can be achieved by providing an unlocking device.

## Description

### RELATED APPLICATION

The present disclosure claims priority to Chinese Patent Application No. 202310132744.8 filed on February 20, 2023, which is hereby incorporated by reference its entirety.

### TECHNICAL FIELD

The present disclosure relates to the technical field of vehicle charging, and particularly to a double-lock-rod electronic lock.

### BACKGROUND

With the rise of new energy technologies, the electric vehicle industry has developed rapidly. The charging safety and the reliability of electric vehicles have both received widespread attention from professionals in the electric vehicle industry, and electronic locks provide the guarantee for the charging safety of electric vehicles.

The electronic lock is a critical device for locking engagement between a charging gun and a charging socket. At present, the configurations of the electronic locks in charging systems of new energy vehicles on the market are as follows: the electronic lock for an Alternating Current (AC) charging system installed within the charging socket, and the electronic lock of a Direct Current (DC) charging system is integrated into the charging gun. As users have increasingly higher requirements for the charging time, the demand for fast charging is also growing, which has led to increasing attention to the safety of a charging process. However, most of the existing charging guns are equipped with the electronic locks with single-locking-rod for the AC charging system, which cannot realize that one charging electronic lock of a vehicle has the function of locking both DC and AC charging guns. Therefore, it is necessary to provide a new solution of the electronic lock to solve the above problem.

### SUMMARY

The present disclosure aims to provide a double-lock-rod electronic lock with a simple structure and a low production cost.

A double-lock-rod electronic lock, including a driving unit, a transmission mechanism, a first locking rod and a second locking rod;
an output end of the driving unit is connected to an input end of the transmission mechanism;
the transmission mechanism includes a fixed shaft and a swing arm assembly rotatably connected around the fixed shaft, and the driving unit drives the swing arm assembly to perform reciprocating rotational swing; and the swing arm assembly includes a first swing arm and a second swing arm which are disposed opposite to each other, the first swing arm is connected to the first locking rod, and the second swing arm is connected to the second locking rod; and
the transmission mechanism is configured to be driven by the driving unit to cause the first locking rod and the second locking rod to move in opposite directions along their respective predetermined movement paths.

Optionally, the first locking rod and the second locking rod are disposed in parallel, and an axis of the fixed shaft is perpendicular to axes of the first locking rod and the second locking rod.

Optionally, extension directions of the first swing arm and the second swing arm are both perpendicular to an axis of the fixed shaft.

Optionally, the first locking rod includes a first engagement recess and the second locking rod includes a second engagement recess; the first swing arm abuts against the first engagement recess to drive the first locking rod to move, and the second swing arm abuts against the second engagement recess to drive the second locking rod to move.

Optionally, the first swing arm and the second swing arm are positioned at an angle to each other, with an included angle greater than 90° therebetween.

Optionally, the first swing arm is located in a first plane and the second swing arm is located in a second plane, and the second plane is parallel to the first plane.

Optionally, the first swing arm is located in a first plane, and the second swing arm is located in a second plane, and the second plane is intersected with the first plane.

Optionally, the first swing arm and/or the second swing arm is provided with at least one bent portion.

Optionally, the first swing arm and the second swing arm have an equal length.

Optionally, a ratio of a perpendicular distance from a connection point between the first swing arm and the first locking rod to an axis of the fixed shaft, to a perpendicular distance from a connection point between the second swing arm and the second locking rod to the axis of the fixed shaft is in the range of 2/1 to 1/2.

Optionally, each of the first swing arm and the second swing arm is provided with a groove extending along an axial direction thereof.

Optionally, the double-lock-rod electronic lock further includes a housing, which includes a lower shell and an upper cover; the fixed shaft is fixedly disposed on a bottom wall of the housing, and the upper cover is provided with a limiting column at a position corresponding to the fixed shaft; the swing arm assembly further includes a rotating shaft connecting the first swing arm and the second swing arm, and the rotating shaft is sleeved over the fixed shaft and limited by the limiting column.

Optionally, the input end of the transmission mechanism is a first bevel gear connected to the output end of the driving unit; the rotating shaft is provided with a sector bevel gear meshed with the first bevel gear, and the driving unit drives the first bevel gear to rotate, which in turn drives the rotating shaft to rotate.

Optionally, an outer contour of the rotating shaft is provided with a step, and a non-toothed end of the sector bevel gear abuts against a surface of the step.

Optionally, an included angle between two side edges of the sector bevel gear is greater than or equal to 120°.

Optionally, the first bevel gear further includes a spline shaft, which is disposed at a major diameter end of the first bevel gear.

Optionally, the output end of the driving unit is constructed as a gear assembly detachably connected to the spline shaft.

Optionally, the gear assembly includes a driving gear and a second bevel gear meshed with the driving gear; a major diameter end of the second bevel gear is provided with a connection shaft extending along an axial direction of the second bevel gear, and a center of the connection shaft is provided with a spline hole matched with and connected to the spline shaft.

Optionally, the gear assembly includes a driving gear, an output gear connected to the first bevel gear, and at least one transmission gear provided between the driving gear and the output gear.

Optionally, a sidewall of the lower shell away from the driving unit is provided with a first hole and a second hole, the first locking rod at least partially passes through the first hole, and the second locking rod at least partially passes through the second hole.

Optionally, a first sealing ring is provided between the first locking rod and the first hole, and a second sealing ring is provided between the second locking rod and the second hole.

Optionally, the double-lock-rod electronic lock further includes an unlocking device, a contact face of which with the first swing arm and/or the second swing arm is an unlocking surface, and the unlocking device is configured such that the unlocking surface abuts against the first swing arm and/or the second swing arm under an external force, so as to reset the first swing arm and/or the second swing arm, and then reset the first locking rod and the second locking rod to initial positions thereof.

Optionally, the unlocking device includes a pressing portion disposed outside the lower shell and an unlocking portion disposed inside the lower shell; the unlocking portion is configured to move reciprocatingly in a direction perpendicular to an axis of the fixed shaft; when the unlocking device is in an initial state, a first predetermined distance exists between the unlocking surface and a contact face of the first swing arm and/or the second swing arm at its initial position, and the first predetermined distance is greater than or equal to a preset moving distance of each of the first locking rod and the second locking rod.

Optionally, the unlocking portion includes a first unlocking arm and a second unlocking arm, which are disposed to face the first swinging arm and the second swinging arm, respectively; the unlocking surface includes a first unlocking surface and a second unlocking surface; an end face of the first unlocking arm is configured as the first unlocking surface, and an end surface of the second unlocking arm is configured as the second unlocking surface; the first unlocking arm is configured to push the first swing arm, and the second unlocking arm is configured to push the second swing arm.

Optionally, in a state that the first locking rod or the second locking rod moves to a maximum preset moving distance along the predetermined movement path, there is a second distance from the first unlocking surface to the contact face of the first swing arm or from the second unlocking surface to the contact face of the second swing arm, and the second distance is greater than or equal to 0.

Optionally, when the unlocking device is in an unlocking state, the first unlocking surface and the second unlocking surface are in contact with the first swing arm and the second swing arm simultaneously.

Optionally, a third distance between an extension end of the first unlocking arm and an extension end of the second unlocking arm is less than a distance between an axis of the first locking rod and an axis of the second locking rod.

Optionally, the third distance is equal to a distance from a midpoint of the first swing arm to a midpoint of the second swing arm.

Optionally, a third sealing ring is provided between the unlocking portion and the lower shell.

Optionally, a material of the first locking rod and the second locking rod is different from that of the first engagement recess and the second engagement recess.

Optionally, the material of the first locking rod and the second locking rod is one selected from SUS 304, 45# steel, 40 Cr, and 65 Mn.

Optionally, the material of the first engagement recess and the second engagement recess is one selected from Polyoxymethylene (POM), Nylon with 15% Glass Fiber (PA-GF 15), Nylon 6 with 30% Glass Fiber (PA6-GF 30), and Polybutylene Terephthalate + Acrylonitrile Styrene Acrylate blend with 30% GF (PBT+ASA-GF 30).

Optionally, a transmission ratio of the sector bevel gear to the first bevel gear is in the range of 1 to 11.67.

Optionally, an output power of the driving unit is in the range of 0.5 W to 16 W.

Therefore, through calculation, the transmission ratio within this range can meet the requirement of the output speed.

The present disclosure achieves at least the following advantageous effects:
1. The double-lock-rod electronic lock of the present disclosure adopts an electronic lock structure of a "one-drives-two" mode, and by means of the integrated design of double locking rods, enables both an AC charging end and a DC charging end of a charging socket to have a locking function while having very small impact on the size of the charging socket; and meanwhile, emergency unlocking can be achieved by a provided unlocking device.
2. In the double-lock-rod electronic lock of the present disclosure, the positional limitations of the transmission mechanism and the housing are achieved by the fixed shaft of the transmission mechanism and the limiting column of the upper cover.
3. In the double-lock-rod electronic lock of the present disclosure, the first locking rod and the second locking rod can independently achieve the functions of locking and unlocking by setting the swing arm assembly to rotate around the fixed shaft.
4. In the double-lock-rod electronic lock of the present disclosure, the preset moving distance of the first locking rod and the second locking rod can be achieved by setting a distance from the unlocking surface of the unlocking device to the first swing arm and/or the second swing arm.
5. In the double-lock-rod electronic lock of the present disclosure, the unlocking function of the unlocking arm can be achieved by setting a second distance from the unlocking surface of the first unlocking arm or the second unlocking arm to the contact face of the first swing arm or the second swing arm (specifically, there is a second distance from the first unlocking surface of the first unlocking arm to the contact face of the first swing arm, or from the second unlocking surface of the second unlocking arm to the contact face of the second swing arm), as well as a third distance from the unlocking surface of the first unlocking arm to the unlocking surface of the second unlocking arm.
6. In the double-lock-rod electronic lock of the present disclosure, the housing achieves an IP67 protection rating (Ingress Protection Rating 67) by means of a first sealing ring provided between the first locking rod and the contact face of the first lower shell, and a second sealing ring provided between the unlocking portion and the housing.

Other features and advantages of the present disclosure will be clearer from the following detailed description of the embodiments of the present disclosure with reference to the drawings.

### BRIEF DESCRIPTION OF THE DRAWINGS

The drawings, which are incorporated in and constitute a part of the specification, illustrate the embodiments of the present disclosure, and together with the description, serve to explain the principles of the present disclosure.
FIG. 1 illustrates an axonometric view of a double-lock-rod electronic lock according to an embodiment of the present disclosure;
FIG. 2 illustrates a structural diagram of a double-lock-rod electronic lock with double locking rods in initial positions according to an embodiment of the present disclosure;
FIG. 3 illustrates a cross-sectional view of a double-lock-rod electronic lock taken along an X-axis direction according to the embodiment of the present disclosure;
FIG. 4 illustrates a structural diagram of a double-lock-rod electronic lock when a second locking rod is at a maximum movement position according to an embodiment of the present disclosure;
FIG. 5 illustrates a structural diagram of a swing arm assembly of a double-lock-rod electronic lock according to a first embodiment of the present disclosure;
FIG. 6 illustrates a structural diagram of a swing arm assembly of a double-lock-rod electronic lock according to a second embodiment of the present disclosure;
FIG. 7 illustrates a structural diagram of a swing arm assembly of a double-lock-rod electronic lock according to a third embodiment of the present disclosure;
FIG. 8 illustrates a structural diagram of a first bevel gear and a spline shaft of a double-lock-rod electronic lock according to an embodiment of the present disclosure;
FIG. 9 illustrates a structural diagram of a second bevel gear and a connection shaft of a double-lock-rod electronic lock according to an embodiment of the present disclosure;
FIG. 10 illustrates a structural diagram of a first locking rod and a second locking rod of a double-lock-rod electronic lock according to an embodiment of the present disclosure;
FIG. 11 illustrates a structural diagram of an unlocking portion of an unlocking device in a double-lock-rod electronic lock according to an embodiment of the present disclosure;
FIG. 12 illustrates a structural diagram of a pressing portion in an unlocking device of a double-lock-rod electronic lock according to an embodiment of the present disclosure;
FIG. 13 illustrates an influence of a transmission ratio of a sector bevel gear 29 to a first bevel gear 28 of a double-lock-rod electronic lock on a speed of the electronic lock according to an embodiment of the present disclosure; and
FIG. 14 illustrates a schematic diagram of an influence of different output powers of a double-lock-rod electronic lock on a speed and abnormal sound of the electronic lock according to an embodiment of the present disclosure.

Reference numerals:
1-driving unit; 11-driving gear; 12-second bevel gear; 13-connection shaft; 14-spline hole;
2-transmission mechanism; 21-fixed shaft; 22-first swing arm; 23-second swing arm; 24-rotating shaft; 25-bent portion; 26-groove; 27-mounting hole; 28-first bevel gear; 29-sector bevel gear; 210-step; 211-spline shaft;
3-first locking rod; 31-first engagement recess;
4-second locking rod; 41-second engagement recess;
5-housing; 51-lower shell; 52-upper cover; 53-limiting column;
6-unlocking device; 61-pressing portion; 62-unlocking portion; 63-push rod; 64-flat plate portion;
65-elastic member; 66-annular groove; 67-first section; 68-second section; 69-stepped hole; 610-clamping groove; 611-first unlocking surface; 612-first unlocking arm;
613-second unlocking arm; 614-sealing groove; 615-second unlocking surface.

### DESCRIPTION OF THE EMBODIMENTS

Various embodiments of the present disclosure will now be described in detail with reference to the drawings. It should be noted that relative arrangements of components and steps, numerical expressions, and values set forth in these embodiments do not limit the scope of the present disclosure unless specifically stated otherwise.

The following description of at least one embodiment is illustrative only and in no way used as any limitation to the present disclosure and its applications or uses.

Technologies, methods, and devices known to those of ordinary skill in the related art may not be discussed in detail, but where appropriate, such technologies, methods, and devices should be considered as part of the specification.

In all examples illustrated and discussed herein, any specific value should be construed as merely exemplary and not as a limitation. Therefore, other examples of the exemplary embodiments may have different values.

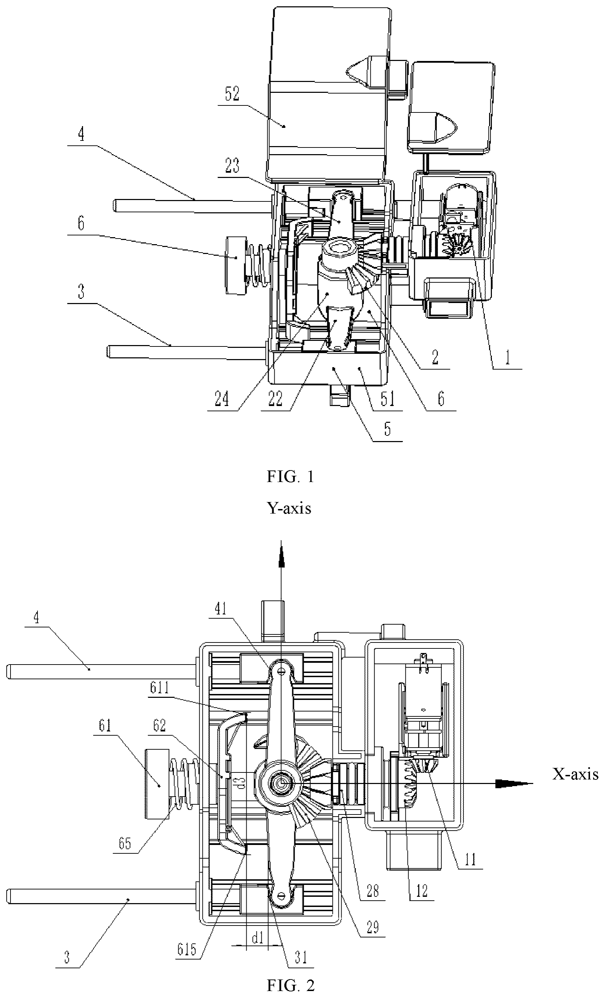

As illustrated in FIGS. 1 to 3, a double-lock-rod electronic lock includes a driving unit 1, a transmission mechanism 2, a first locking rod 3 and a second locking rod 4;
an output end of the driving unit 1 is connected to an input end of the transmission mechanism 2;
the transmission mechanism 2 includes a fixed shaft 21 and a swing arm assembly rotatably connected around the fixed shaft 21, and the driving unit 1 drives the swing arm assembly to perform reciprocating rotational swing; the swing arm assembly includes a first swing arm 22 and a second swing arm 23 which are disposed opposite to each other, the first swing arm 22 is connected to the first locking rod 3, and the second swing arm 23 is connected to the second locking rod 4; and
the transmission mechanism 2 is configured to be driven by the driving unit 1 to cause the first locking rod 3 and the second locking rod 4 to move in opposite directions along their respective predetermined movement paths.

The present disclosure adopts an electronic lock structure of a "one-drives-two" mode, and by means of the integrated design of double locking rods, enables both an AC charging end and a DC charging end of a charging socket to have a locking function while having very small impact on the size of the charging socket. Specifically, the electronic lock includes a driving unit 1 and a transmission mechanism 2 connected to an output end of the driving unit 1; the transmission mechanism 2 includes a fixed shaft 21 and a swing arm assembly freely rotatable around the fixed shaft 21, and the swing arm assembly includes a first swing arm 22 and a second swing arm 23 that are disposed opposite to each other, the first swing arm 22 is connected to the first locking rod 3, and the second swing arm 23 is connected to the second locking rod 4; and the fixed shaft 21 is fixed in a housing 5 described below.

In the present disclosure, a path between an unlocking position and a locking position of the first locking rod 3 and a path between an unlocking position and a locking position of the second locking rod 4 are respectively defined as predetermined movement paths, and the unlocking positions of the first locking rod 3 and the second locking rod 4 are respectively defined as initial positions.

The driving unit 1 drives the swing arm assembly to perform reciprocating rotational swing. When the first swing arm 22 drives the first locking rod 3 to extend or retract along the predetermined movement path of the first locking rod 3, the second swing arm 23 drives the second locking rod 4 to perform the opposite movement to that of the first locking rod 3 along the predetermined movement path of the second locking rod 4. Similarly, when the second locking rod 4 extends or retracts, the first locking rod 3 also performs the opposite movement to that of the second locking rod 4. Thus, the first locking rod 3 and the second locking rod 4 move in opposite directions along their respective predetermined movement paths.

In this embodiment, the first locking rod 3 and the second locking rod 4 each have a length ranging from 25 mm to 75 mm, and an effective stroke ranging from 5 mm to 10 mm.

Thus, by the rotation and the swinging performed by the swing arm assembly around the fixed shaft 21, the first swing arm 22 and the second swing arm 23 drive the first locking rod 3 and the second locking rod 4 to move, respectively, thereby achieving the locking and unlocking each of the first locking rod 3 and the second locking rod 4.

Optionally, the first locking rod 3 and the second locking rod 4 are disposed in parallel, and an axis of the fixed shaft 21 is perpendicular to axes of both the first locking rod 3 and the second locking rod 4.

Optionally, extension directions of the first swing arm 22 and the second swing arm 23 are both perpendicular to the fixed shaft 21.

Specifically, the first locking rod 3 and the second locking rod 4 are collectively referred to as rod members when the common features thereof are described. In the present disclosure, an extension direction of an axis of the rod member is defined as an X-axis direction, the extension direction of each of the first swing arm 22 and the second swing arm 23 is defined as a Y-axis direction, an extension direction of an axis of the fixed shaft 21 is defined as a Z-axis direction, and a plane formed by X and Y axes is defined as a horizontal plane. The first locking rod 3 and the second locking rod 4 are parallel to the X axis, and are also parallel to each other. The axis of the fixed shaft 21 is perpendicular to both the first locking rod 3 and the second locking rod 4. Meanwhile, in order that the first locking rod 3 and the second locking rod 4 can move reciprocatingly along the movement paths and avoid the loss of an output force, the extension directions of the first swing arm 22 and the second swing arm 23 are set perpendicular to the fixed shaft 21, and the extension directions of the first swing arm 22 and the second swing arm 23 are also perpendicular to axial directions of the first locking rod 3 and the second locking rod 4.

Thus, by setting the positional relationship between the axes of the first locking rod 3 and the second locking rod 4 and the axis of the fixed shaft 21, and the positional relationship between the first swing arm 22, the second swing arm 23 and the fixed shaft 21, the positional relationships among the first locking rod 3, the second locking rod 4, the first swing arm 22, the second swing arm 23, and the fixed shaft 21 are determined, thereby achieving the reciprocating movements of the first locking rod 3 and the second locking rod 4.

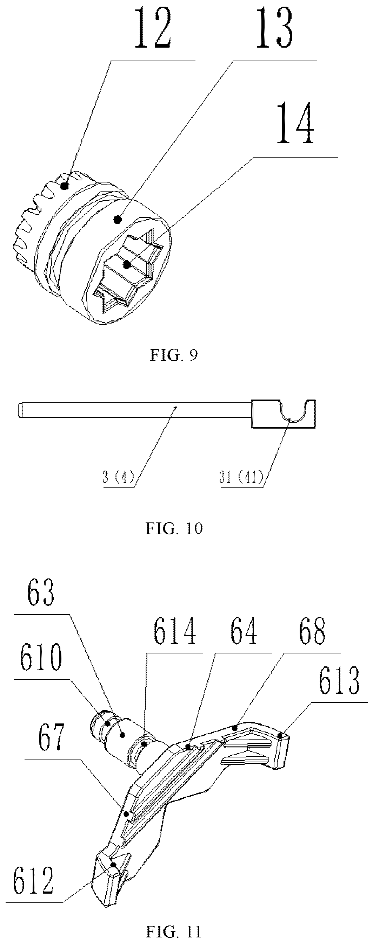

As illustrated in FIGS. 1 and 10, the first locking rod 3 includes a first engagement recess 31, and the second locking rod 4 includes a second engagement recess 41. The first swing arm 22 abuts against the first engagement recess 31 to drive the first locking rod 3 to move, and the second swing arm 23 abuts against the second engagement recess 41 to drive the second locking rod 4 to move.

In this embodiment, the first engagement recess 31 is provided on an end face of the first locking rod 3 along the extension direction of the axis thereof, and the second engagement recess 41 is provided on an end face of the second locking rod 4 along the extension direction of the axis thereof. The first engagement recess 31 and the second engagement recess 41 are each provided with a first sidewall, a second sidewall and a bottom wall, in which the first sidewall and the second sidewall are disposed opposite to each other, and the bottom wall connects the first sidewall and the second sidewall. The first swing arm 22 is clamped between the first sidewall and the second sidewall, the bottom wall is arc-shaped to match an outer contour of an end of the first swing arm 22 away from the fixed shaft 21, and a distance between the outer contour of the first swing arm 22 and the bottom wall is greater than or equal to zero, so that when the first swing arm 22 rotates, a resistance caused by friction with the bottom wall can be avoided. When the swing arm assembly rotates to drive the first swing arm 22 to rotate reciprocatingly, the first swing arm 22 pushes the first sidewall or the second swing arm 23 pushes the second sidewall, which drives the first locking rod 3 or the second locking rod 4 to move reciprocatingly. The outer contour of the end of the first swing arm 22 and the second swing arm 23 away from the fixed shaft 21 is shaped as a semicircle, and a process hole is opened at the center of the semicircle to make the wall thickness uniform, which is more beneficial for the product formation.

In other embodiments, an end surface of each of the first locking rod 3 and the second locking rod 4 may be provided with a protrusion, and the outer contour of the end of each of the first swing arm 22 and the second swing arm 23 away from the fixed shaft 21 is provided with a concave space matched with the protrusion.

Thus, by providing the first engagement recess 31 on the first locking rod 3 and the second engagement recess 41 on the second locking rod 4, so that the first swing arm 22 can drive the first locking rod 3 to move, and the second swing arm 23 can drive the second locking rod 4 to move.

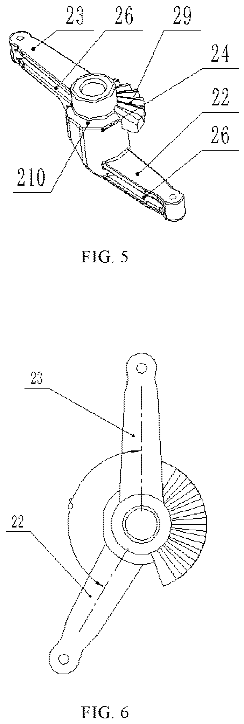

As illustrated in FIGS. 5 to 7, the first swing arm 22 and the second swing arm 23 are positioned at an angle to each other, with an included angle greater than 90° therebetween.

Optionally, the first swing arm 22 is located in a first plane and the second swing arm 23 is located in a second plane, and the second plane is parallel to the first plane.

Optionally, the first swing arm 22 is located in a first plane, and the second swing arm 23 is located in a second plane, and the second plane is intersected with the first plane.

Specifically, a plane where the first swing arm 22 is located is defined as the first plane, and a plane where the second swing arm 23 is located is defined as the second plane. The first swing arm 22 and the second swing arm 23 are disposed with an included angle greater than 90° therebetween.

As illustrated in FIG. 5, in a first embodiment of the swing arm assembly, when the included angle between the first swing arm 22 and the second swing arm 23 is 180°, the first plane is parallel to the second plane; when the first swing arm 22 and the second swing arm 23 have an equal distance to the horizontal plane, the first plane and the second plane are coplanar, i.e., being located in a same plane; when the first swing arm 22 and the second swing arm 23 have different distances to the horizontal plane, there is a height difference between the first plane and the second plane. FIG. 5 illustrates a configuration where the first swing arm 22 and the second swing arm 23 have different distances to the horizontal plane, and the case where the first swing arm 22 and the second swing arm 23 have an equal distance to the horizontal plane is not illustrated.

As illustrated in FIG. 6, in a second embodiment of the swing arm assembly, when the included angle between the first swing arm 22 and the second swing arm 23 is greater than 90° and less than 180°, the first plane is intersected with the second plane, and the first swing arm 22 and the second swing arm 23 may have an equal distance or different distances to the horizontal plane. FIG. 6 illustrates a configuration where the first swing arm 22 and the second swing arm 23 have different distances to the horizontal plane, and the case where the first swing arm 22 and the second swing arm 23 have an equal distance to the horizontal plane is not illustrated in the drawings of the specification.

In the above two embodiments, neither of the first swing arm 22 and the second swing arm 23 is provided with a bent portion.

Thus, by setting different included angles between the first swing arm 22 and the second swing arm 23 and different distances from the first swing arm 22 and the second swing arm 23 to the horizontal plane, various forms of locking can be realized.

Optionally, the first swing arm 22 and/or the second swing arm 23 is provided with at least one bent portion 25.

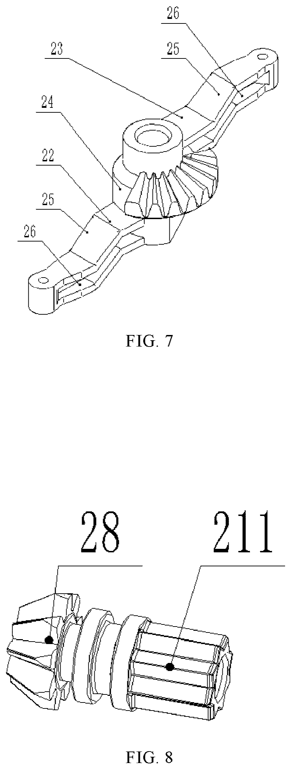

As illustrated in FIG. 7, in a third embodiment of the swing arm assembly, in order that the swing arm assembly can drive the first locking rod 3 and the second locking rod 4 to move along the movement paths of different positions, the first swing arm 22 and/or the second swing arm 23 is provided with at least one bent portion 25, and the included angle between the first swing arm 22 and the second swing arm 23 is greater than 90°.

Therefore, the swinging positions and directions of the first swing arm 22 and the second swing arm 23 can be changed by disposing the bent portion 25, thereby achieving the locking of the rod members at different positions.

Optionally, the first swing arm 22 and the second swing arm 23 have an equal length.

Optionally, a ratio of a perpendicular distance from a connection point between the first swing arm 22 and the first locking rod 3 to an axis of the fixed shaft 21, to a perpendicular distance from a connection point between the second swing arm 23 and the second locking rod 4 to the axis of the fixed shaft 21 is in the range of 2/1 to 1/2.

Specifically, in order that the distances from the axis of the first locking rod 3 and the axis of the second locking rod 4 to the axis of the fixed shaft 21 are different, the lengths of the first swing arm 22 and the second swing arm 23 may be designed to be equal or in proportion. When the distance from the axis of the first locking rod 3 to the axis of the fixed shaft 21 is greater than the distance from the axis of the second locking rod 4 to the axis of the fixed shaft 21, the ratio of the perpendicular distance from the connection point between the first swing arm 22 and the first locking rod 3 to the axis of the fixed shaft 21, to the perpendicular distance from the connection point between the second swing arm 23 and the second locking rod 4 to the axis of the fixed shaft 21 is greater than 1/1. While keeping the rest structures unchanged, the inventor finds through tests that when the ratio of the perpendicular distance from the connection point between the first swing arm 22 and the first locking rod 3 to the axis of the fixed shaft 21, to the perpendicular distance from the connection point between the second swing arm 23 and the second locking rod 4 to the axis of the fixed shaft 21 is greater than 2/1, in a case where the swing arm assembly rotates with the same angle, a moving distance of the second locking rod 4 driven by the second swing arm 23 cannot meet the locking requirement. Meanwhile, in consideration of the volume of the whole double-lock-rod electronic lock and the stress conditions thereof, the ratio of the perpendicular distance from the connection point between the first swing arm 22 and the first locking rod 3 to the axis of the fixed shaft 21, to the perpendicular distance from the connection point between the second swing arm 23 and the second locking rod 4 to the axis of the fixed shaft 21 is set to be less than or equal to 2/1. The inventor conducts the same test on a ratio between the second swing arm 23 and the first swing arm 22, and concludes that the ratio of the perpendicular distance from the connection point between the first swing arm 22 and the first locking rod 3 to the axis of the fixed shaft 21, to the perpendicular distance from the connection point between the second swing arm 23 and the second locking rod 4 to the axis of the fixed shaft 21 should be greater than or equal to 1/2. Therefore, the inventor sets the ratio of the perpendicular distance from the connection point between the first swing arm 22 and the first locking rod 3 to the axis of the fixed shaft 21, to the perpendicular distance from the connection point between the second swing arm 23 and the second locking rod 4 to the axis of the fixed shaft 21 to range from 2/1 to 1/2.

Thus, by setting the ratio of the perpendicular distance from the connection point between the first swing arm 22 and the first locking rod 3 to the axis of the fixed shaft 21, to the perpendicular distance from the connection point between the second swing arm 23 and the second locking rod 4 to the axis of the fixed shaft 21, different locking of the first locking rod 3 and the second locking rod 4 can be realized.

Optionally, each of the first swing arm 22 and the second swing arm 23 is provided with a groove extending along an axial direction thereof.

Specifically, to ensure the strengths of the first swing arm 22 and the second swing arm 23, and also for the sake of a beautiful appearance, grooves 26 are symmetrically formed on two sidewalls of each of the first swing arm 22 and the second swing arm 23 along the axial direction thereof.

As illustrated in FIG. 1, the double-lock-rod electronic lock further includes a housing 5, which includes a lower shell 51 and an upper cover 52. The fixed shaft 21 is fixedly disposed on a bottom wall of the lower shell 51, and the upper cover 52 is provided with a limiting column 53 at a position corresponding to the fixed shaft 21. The swing arm assembly further includes a rotating shaft 24 connecting the first swing arm 22 and the second swing arm 23, and the rotating shaft 24 is sleeved over the fixed shaft 21 and limited by the limiting column 53.

Specifically, the double-lock-rod electronic lock further includes a housing 5, which includes a lower shell 51 and an upper cover 52, and the driving unit 1 and the transmission mechanism 2 are both disposed in the lower shell. The fixed shaft 21 is fixed on a bottom wall of the lower shell 51, and the upper cover 52 is provided with a limiting column 53 at a position corresponding to the fixed shaft 21. The swing arm assembly further includes a rotating shaft 24 connecting the first swing arm 22 and the second swing arm 23. A mounting hole 27 is provided on the rotating shaft 24 along an axial direction thereof. Firstly, the rotating shaft 24 is sleeved over the fixed shaft 21 through the mounting hole 27, and then the limiting column 53 is inserted into the mounting hole 27, thereby limiting the swing arm assembly in the Z-axis direction. Meanwhile, to ensure the free rotation of the swing arm assembly, the fixed shaft 21 is in clearance fit with the limiting column 53 and the mounting hole 27 respectively, with a fit clearance less than or equal to 1 mm. When the fit clearance is too large, the rotation trajectories of the first swing arm 22 and the second swing arm 23 are irregular, which easily causes the first locking rod 3 and the second locking rod 4 to be stuck or even damaged during movement.

Thus, by disposing the rotating shaft 24, and setting the mode of mounting the rotating shaft 24 with the fixed shaft 21 and the limiting column 53, the swing arm assembly can rotate around the fixed shaft 21 and drive the first swing arm 22 and the second swing arm 23 to rotate reciprocatingly.

As illustrated in FIGS. 5 to 8, the input end of the transmission mechanism 2 is a first bevel gear 28 connected to the output end of the driving unit 1. The rotating shaft 24 is provided with a sector bevel gear 29 meshed with the first bevel gear 28, and the driving unit 1 drives the first bevel gear 28 to rotate, thereby driving the rotating shaft 24 to rotate.

In this embodiment, in order that the rotating shaft 24 can rotate around the fixed shaft 21, the transmission mechanism 2 further includes a first bevel gear 28 connected to the output end of the driving unit 1, i.e., the first bevel gear 28 is the input end of the transmission mechanism 2. The rotating shaft 24 is provided with a sector bevel gear 29 meshed with the first bevel gear 28, and the first bevel gear 28 is driven to rotate by the driving unit 1, thereby driving the rotating shaft 24 to rotate through the sector bevel gear 29.

Thus, by setting the first bevel gear 28 to mesh with the sector bevel gear 29, the rotating shaft 24 is driven to rotate, thereby achieving the rotations of the first swing arm 22 and the second swing arm 23.

Optionally, an outer contour of the rotating shaft 24 is provided with a step 210, and a non-toothed end of the sector bevel gear 29 abuts against a surface of the step 210.

Optionally, an included angle between two side edges of the sector bevel gear 29 is greater than or equal to 120°.

In this embodiment, to ensure the connection strength between the sector bevel gear 29 and the rotating shaft 24, the outer contour of the rotating shaft 24 is provided with a step 210, an end of the sector bevel gear 29 without a tooth surface abuts against the face of the step 210, and a surface contour of a minor diameter end of the sector bevel gear 29 is matched with and connected to an outer surface contour of the step 210.

In other embodiments, the outer contour of the rotating shaft 24 is provided with no step, and an end surface of the minor diameter end of the sector bevel gear 29 is directly fixed to the outer contour of the rotating shaft 24.

In the present disclosure, the rotation direction of the driving unit 1 when the first locking rod 3 extends is defined as a forward rotation. The first swing arm 22 drives the first locking rod 3 to extend along the predetermined movement path, and the driving unit 1 drives the rotating shaft 24 to rotate forward to lock the first locking rod 3. The driving unit 1 drives the rotating shaft 24 to rotate reversely to unlock the first locking rod 3. When the driving unit 1 drives the rotating shaft 24 to continue to rotate reversely, the second swing arm 23 drives the second locking rod 4 to extend along the movement path to lock the second locking rod 4. In order that both the first locking rod 3 and the second locking rod 4 can move along the predetermined movement paths, a sector included angle of the sector bevel gear 29 should be greater than or equal to 120°, i.e., the sector bevel gear 29 should cover 1/3 of a radial outer contour of the rotating shaft 24.

Thus, by disposing the step 210 on the rotating shaft 24 to fix the sector bevel gear 29, the connection strength between the sector bevel gear 29 and the rotating shaft 24 is ensured. Meanwhile, the locking and unlocking of each of the first locking rod 3 and the second locking rod 4 can be achieved by limiting the included angle of the sector bevel gear 29.

Optionally, the first bevel gear 28 further includes a spline shaft 211, which is disposed at a major diameter end of the first bevel gear 28.

In this embodiment, the major diameter end of the first bevel gear 28 is provided with the spline shaft 211 which extends along an axial direction of the first bevel gear 28.

Thus, by disposing the spline shaft 211, the first bevel gear 28 is connected to the output end of the driving unit 1.

In other embodiments, a connection hole may be provided on the first bevel gear 28 along the axial direction thereof.

As illustrated in FIGS. 1 and 9, the output end of the driving unit 1 is constructed as a gear assembly detachably connected to the spline shaft 211.

Optionally, the gear assembly includes a driving gear 11 and a second bevel gear 12 meshed with the driving gear 11; a major diameter end of the second bevel gear 12 is provided with a connection shaft 13 extending along an axial direction of the second bevel gear 12, and a center of the connection shaft 13 is provided with a spline hole 14 matched with and connected to the spline shaft 211.

Specifically, the output end of the driving unit 1 is constructed as a gear assembly detachably connected to the spline shaft 211. The driving unit 1 may be composed of an electric motor and a gear assembly, or composed of a pneumatic motor and a gear assembly.

In a first embodiment, the gear assembly is driven by a single-stage gear consisting of a driving gear 11 and a second bevel gear 12. The driving gear 11 is connected to an output shaft of the driving unit 1, and the second bevel gear 12 is meshed with the driving gear 11. A major diameter end of the second bevel gear 12 is provided with a connection shaft 13 extending along an axial direction of the second bevel gear 12, and a center of the connection shaft 13 is provided with a spline hole 14 matched with and connected to the spline shaft 211. The driving unit 1 drives the second bevel gear 12 to rotate through the driving gear 11, and the second bevel gear 12 drives the first bevel gear 28 to rotate, thereby driving the rotating shaft 24 to rotate. When the first bevel gear 28 is directly provided with a connection hole instead of the spline shaft, the connection shaft 13 is directly disposed as a shaft matched with the connection hole, eliminating the need for the spline hole 14.

In this embodiment, the driving unit 1 is composed of an electric motor and a gear assembly, and the driving gear 11 is a bevel gear, and the number of teeth of the driving gear 11 is less than that of the second bevel gear 12.

Thus, by disposing the driving gear 11 and the second bevel gear 12 to reduce an output rotational speed of the driving unit 1, an output torque increases, and the spline hole 14 is connected to the spline shaft 211 to achieve the rotation of the rotating shaft 24.

Optionally, the gear assembly includes a driving gear 11, an output gear connected to the first bevel gear, and at least one transmission gear provided between the driving gear 11 and the output gear.

In a second embodiment, the gear assembly includes a driving gear 11, an output gear connected to the first bevel gear, and at least one transmission gear provided between the driving gear 11 and the output gear.

Thus, the multi-stage transmission is used to mainly improve an output torque of the driving unit 1. For the electric motor with the same torque, the output torque increases as the transmission ratio increases, and on the other hand, under the same output torque, the requirement for the electric motor is degraded as the transmission ratio increases, which is more conducive to the selection of the electric motor. It is possible to select a small-scale electric motor, which is more beneficial to the product size.

As illustrated in FIGS. 1 to 3, a sidewall of the lower shell 51 away from the driving unit 1 is provided with a first hole and a second hole, the first locking rod 3 at least partially passes through the first hole, and the second locking rod 4 at least partially passes through the second hole.

Optionally, a first sealing ring is provided between the first locking rod 3 and the first hole, and a second sealing ring is provided between the second locking rod 4 and the second hole.

Specifically, a sidewall of the lower shell 51 away from the driving unit 1 is provided with a first hole for the first locking rod 3 and the second locking rod 4 to pass through and a second hole for the second locking rod 4 to pass through, and the first locking rod 3 at least partially passes through the first hole, and the second locking rod 4 at least partially passes through the second hole. Meanwhile, in order to ensure the sealing performance of the housing 5 to meet the requirements of the IP67 protection rating, a first sealing ring is provided between the first locking rod 3 and the first hole, and a second sealing ring is provided between the second locking rod 4 and the second hole.

Therefore, the first locking rod 3 and the second locking rod 4 at least partially pass through the lower shell by disposing the first hole and the second hole, and the protection level of the housing 5 meets the IP67 protection rating by disposing the first sealing ring and the second sealing ring.

As illustrated in FIG. 1, the double-lock-rod electronic lock further includes an unlocking device 6, a contact face of which with the first swing arm 22 and/or the second swing arm 23 is an unlocking surface, and the unlocking device 6 is configured such that the unlocking surface abuts against the first swing arm 22 and/or the second swing arm 23 under an external force, so as to reset the first swing arm 22 and/or the second swing arm 23, and then reset the first locking rod 3 and the second locking rod 4 to initial positions thereof.

Specifically, the double-lock-rod electronic lock is further provided with a manual unlocking device 6. When the driving unit 1 of the double-lock-rod electronic lock fails to drive the first locking rod 3 or the second locking rod 4 to release the locking state, the first swing arm 22 or the second swing arm 23 of the transmission mechanism 2 may be reset by the unlocking device 6, thereby resetting the first locking rod 3 and the second locking rod 4 to the initial positions thereof.

More specifically, a contact face of the unlocking device 6 with the first swing arm 22 and/or the second swing arm 23 is defined as an unlocking surface. When an external force is applied to the unlocking device 6, the unlocking surface abuts against the first swing arm 22 and/or the second swing arm 23 to reset the first swing arm 22 and/or the second swing arm 23, thereby resetting the first locking rod 3 and the second locking rod 4 to the initial positions thereof.

Thus, manual unlocking is achieved by disposing the unlocking device 6 and the unlocking surface.

As illustrated in FIGS. 2, 11 and 12, the unlocking device 6 includes a pressing portion 61 disposed outside the lower shell 5 and an unlocking portion 62 disposed inside the lower shell. The unlocking portion 62 is configured to move reciprocatingly in a direction perpendicular to an axis of the fixed shaft 21. When the unlocking device 6 is in an initial state, a first predetermined distance d1 exists between the unlocking surface and a contact face of the first swing arm 22 and/or the second swing arm 23 at its initial position, and the first predetermined distance d1 is greater than or equal to a preset moving distance of each of the first locking rod 3 and the second locking rod 4.

In this embodiment, the unlocking device 6 is composed of two portions, i.e., a pressing portion 61 and an unlocking portion 62. The pressing portion 61 is disposed outside the lower shell 5, and the unlocking portion 62 partially passes through the lower shell 51 and is fixedly connected to the pressing portion 61. An elastic member 65 is further provided between the pressing portion 61 and the unlocking portion 62. The pressing portion 61 includes an annular groove 66. One end of the elastic member 65 is constructed to contact a bottom wall of the annular groove 66, and the other end of the elastic member 65 is constructed to be compressed under an external force to drive the unlocking portion 62 to move and trigger an unlocking action. When the unlocking device 6 is in an unactuated state, the elastic member 65 naturally extends, and when the unlocking device 6 is in a pressed state, the elastic member 65 is in a maximum compression state.

When the unlocking device 6 is in an initial state, the unlocking surface has a first predetermined distance d1 to a contact face of the first swing arm 22 and/or the second swing arm 23 at the initial position, and the first locking rod 3 and the second locking rod 4 cannot reach a preset moving distance thereof unless the first predetermined distance d1 is greater than or equal to each of the preset moving distances thereof.

In this embodiment, the elastic member is a spring with an elastic force ranging from 3N to 15N.

Through calculation and test, it is concluded that in a case where the elastic force is less than 3N and the unlocking device 6 is in the pressed state under the external force, the spring cannot make the unlocking device 6 return to its unactuated state when the external force is withdrawn; and unlocking cannot be completed when the elastic force is greater than 15N and the external force acts on the unlocking device 6. Therefore, the elastic force of the spring is selected to be within a range of 3N to 15N.

Thus, by defining the first predetermined distance of the unlocking device 6, the first locking rod 3 and the second locking rod 4 can be move by the maximum moving distance.

Optionally, the unlocking portion 62 includes a first unlocking arm 612 and a second unlocking arm 613, which are disposed to face the first swinging arm 22 and the second swinging arm 23, respectively. The unlocking surface includes a first unlocking surface 611 and a second unlocking surface 615. An end face of the first unlocking arm 612 is constructed as the first unlocking surface 611, and an end face of the second unlocking arm 613 is constructed as the second unlocking surface 615. The first unlocking arm 612 is configured to push the first swing arm 22, and the second unlocking arm 613 is configured to push the second swing arm 23.

In this embodiment, the unlocking portion 62 includes a push rod 63 and a flat plate portion 64 disposed at one end of the push rod, and the other end of the push rod 63 is connected to the pressing portion 61. The elastic member 65 is sleeved over the push rod 63, and the unlocking portion further includes a first section 67 extending from the flat plate portion in a first direction and a second section 68 extending in a second direction, and the second direction forms an included angle with the first direction. The first unlocking arm 612 extends obliquely from a surface of the first section 67, the second unlocking arm 613 extends obliquely from a surface of the second section 68, and the first unlocking arm 612 and the second unlocking arm 613 are disposed to face the first swing arm 22 and the second swing arm 23, respectively. Since, under the external force, the first unlocking arm 612 pushes the first swinging arm 22 and the second unlocking arm 613 pushes the second swinging arm 23, the end face of the first unlocking arm 612 and the end face of the second unlocking arm 613 are contacted with the first swinging arm 22 and the second swinging arm 23, respectively, and the end face of the first unlocking arm 612 is the first unlocking surface 611, and the end face of the second unlocking arm 613 is the second unlocking surface 615.

The pressing portion 61 is further provided with an axially penetrating stepped hole 69, which includes a large hole and a small hole that is constricted radially in a pressing direction. The push rod 63 is provided with a radially recessed clamping groove 610 that is matched with the stepped hole, and the small hole is clamped with the clamping groove 610.

Thus, the external force acts on the pressing portion 61 to push the unlocking portion 62 to drive the first unlocking arm 612 and the second unlocking arm 613 to move, so that the first unlocking surface 611 and the second unlocking surface 615 push the corresponding first swinging arm 22 and the second swinging arm 23, thereby unlocking the rod member.

Specifically, a first included angle is formed between the first unlocking arm 612 and the first section 67, and a second included angle is formed between the second unlocking arm 613 and the second section 68. The first included angle and the second included angle may be the same or different, and the first included angle and/or the second included angle is greater than or equal to 90°.

To ensure the strengths of the pressing portion 61 and the unlocking portion 62, connecting ribs are provided between the first unlocking arm 612 and the first section 67 and between the second unlocking arm 613 and the second section 68. The outer surface of the flat plate portion 64, the outer surface of the first section 67 and the outer surface of the second section 68 are also provided with reinforcing ribs to increase the strength. The bottom wall of the annular groove 66 of the pressing portion 61 is also uniformly distributed with rib plates to increase the strength.

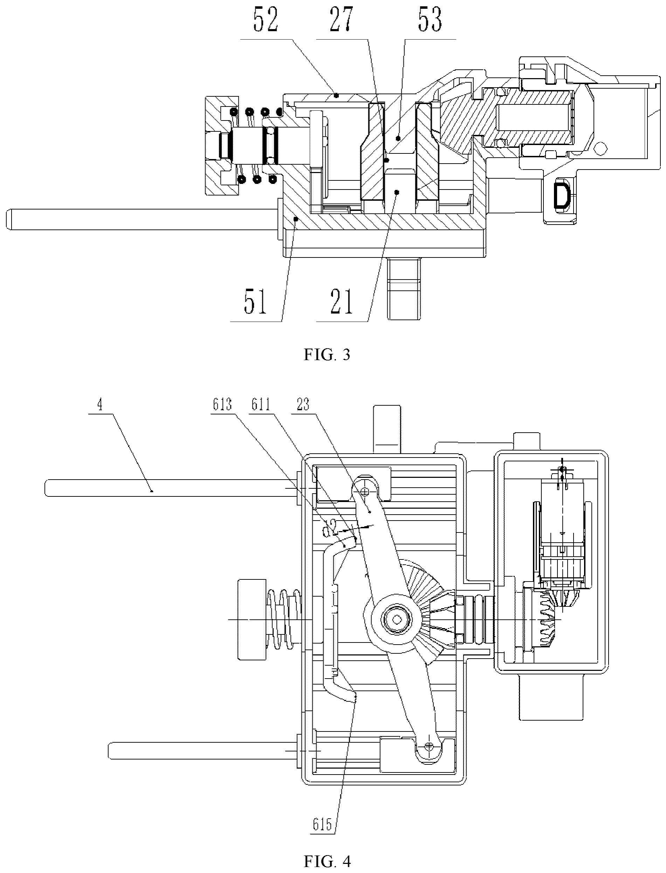

As illustrated in FIG. 4, in a state that the first locking rod 3 or the second locking rod 4 moves to a maximum preset moving distance along the predetermined movement path thereof, there is a second distance from the first unlocking surface 611 to the contact face of the first swing arm 22 or from the second unlocking surface 615 to the contact face of the second swing arm 23, and the second distance is greater than or equal to 0.

Optionally, when the unlocking device 6 is in an unlocking state, the first unlocking surface 611 and the second unlocking surface 615 are in contact with the first swing arm 22 and the second swing arm 23 simultaneously.

Specifically, taking the second locking rod 4 extending to a maximum distance along the predetermined movement path as an example, there is a second distance d2 from the second unlocking surface 615 to the contact face of the second swing arm 23, and the second distance d2 is greater than or equal to 0. When the second distance d2 is 0, the second locking rod 4 extends to the maximum distance along the predetermined movement path, and the second unlocking surface 615 is exactly in contact with the contact face of the second swing arm 23. When the second distance d2 is less than 0, the second locking rod 4 cannot extend to the maximum distance along the predetermined movement path. When the first locking rod 3 extends to the maximum distance along the predetermined movement path, the case is the same between the first unlocking surface 611 to the contact face of the first swing arm 22 and the second unlocking surface 615 to the contact face of the second swing arm 23, which will not be repeated in the present disclosure.

More specifically, when the unlocking device 6 is in the unlocking state, the first unlocking surface 611 and the second unlocking surface 615 are in contact with the first swing arm 22 and the second swing arm 23 simultaneously, thereby ensuring that both the first locking rod 3 and the second locking rod 4 are in the initial positions.

Thus, by setting the second distance d2, both the first locking rod 3 and the second locking rod 4 can achieve the maximum preset movement distance.

Optionally, a third distance between an extension end of the first unlocking arm 612 and an extension end of the second unlocking arm 613 is less than a distance between an axis of the first locking rod 3 and an axis of the second locking rod 4.

Optionally, the third distance is equal to a distance from a midpoint of the first swing arm 22 to a midpoint of the second swing arm 23.

Specifically, in order to enable the first unlocking arm 612 and the second unlocking arm 613 to be contact with the first swing arm 22 and the second swing arm 23 respectively and thereby pushing the first swing arm 22 or the second swing arm 23 to rotate, the third distance d3 between the extension end of the first unlocking arm 612 and the extension end of the second unlocking arm 613 should be less than the distance between the axis of the first locking rod 3 and the axis of the second locking rod 4. When the third distance d3 is equal to the distance between the midpoint of the first swing arm 22 and the midpoint of the second swing arm 23, the midpoints of the first swing arm 22 and the second swing arm 23 are the optimal force-bearing points.

Thus, by setting the range of the third distance, the unlocking of the rod member can be achieved.

Optionally, a third sealing ring is provided between the unlocking portion 62 and the lower shell 51.

Specifically, the lower shell 51 is provided with a third hole on a sidewall where the rod member extends, the push rod 63 of the unlocking portion 62 partially passes through the third hole, a radially recessed sealing groove 614 is provided at a position on the push rod 63 corresponding to the third hole, and a third sealing ring is provided between the sealing groove 614 and the third hole. Thus, by providing the third sealing ring between the third hole and the sealing groove 614, the protection level of the housing 5 meets the IP67 protection rating.

Optionally, a material of the first locking rod 3 and the second locking rod 4 is different from that of the first engagement recess 31 and the second engagement recess 41.

Optionally, the material of the first locking rod 3 and the second locking rod 4 is one selected from SUS 304, 45# steel, 40 Cr, and 65 Mn.

Optionally, the material of the first engagement recess 31 and the second engagement recess 41 is one selected from Polyoxymethylene (POM), PA-GF 15, PA6-GF 30, and Polybutylene Terephthalate + Acrylonitrile Styrene Acrylate blend with 30% GF (PBT+ASA-GF 30).

In this embodiment, to ensure the strengths of the first locking rod 3 and the second locking rod 4, as well as the wear resistance and dimensional stability of the first engagement recess 31 and the second engagement recess 41, the material of the first locking rod 3 and the second locking rod 4 is different from that of the first engagement recess 31 and the second engagement recess 41. The first locking rod 3 and the second locking rod 4 are mainly made of a metal material, such as SUS 304, 45# steel, 40 Cr or 65Mn. The first engagement recess 31 and the second engagement recess 41 are made of a non-metal material with wear resistance, light weight, and high surface hardness, such as POM, PA-GF 15, PA6-GF 30, or PBT+ASA-GF 30.

In other embodiments, the first locking rod 3 and the second locking rod 4 are made of the same material as the first engagement recess 31 and the second engagement recess 41, both being a non-metal material, such as POM, PA-GF 15, PA6-GF 30 or PBT+ASA-GF 30.

Optionally, a transmission ratio of the sector bevel gear 29 to the first bevel gear 28 is in the range of 1 to 11.67.

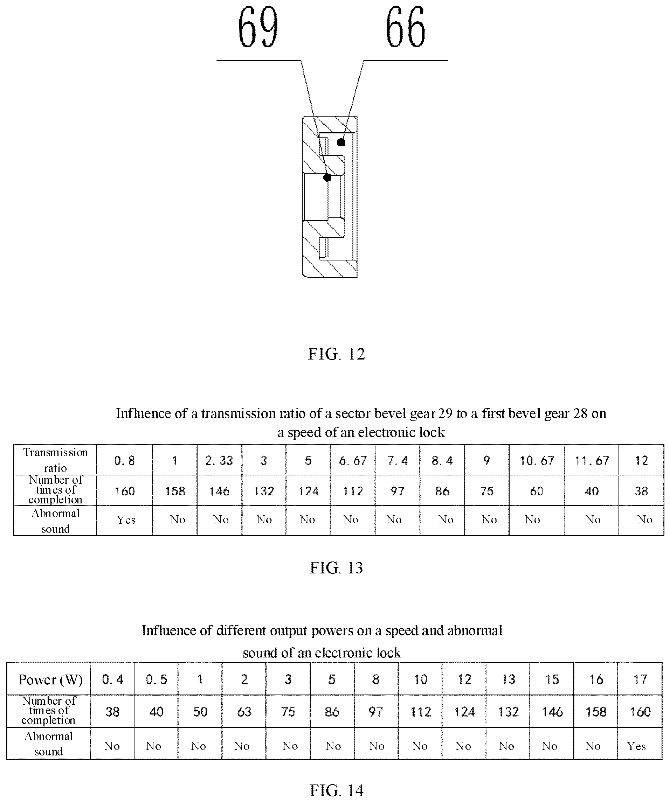

Specifically, the transmission ratio of the sector bevel gear 29 to the first bevel gear 28 is in the range of 1 to 11.67. The transmission ratio is defined as a rotational speed of a driving gear divided by a rotational speed of a driven gear (a rotational speed of a driving gear/a rotational speed of a driven gear). The transmission ratio is inversely proportional to the rotational speed of the driven gear, i.e., the rotational speed of the driven gear decreases as the transmission ratio increases, and vice versa. As a result, abnormal sound may easily occur due to inaccurate control. Therefore, the inventor selects different transmission ratios between the sector bevel gear 29 and the first bevel gear 28 for tests, and observe the number of times of locking or unlocking of the second locking rod 4 completed within one minute. A result of less than 40 times is considered as unqualified, and the presence of abnormal sound is also considered as unqualified. The results are shown in FIG. 13.

As can be seen from FIG. 13, when the transmission ratio of the sector bevel gear 29 to the first bevel gear 28 is less than 1, the electronic lock produces abnormal sound, which is unqualified. Meanwhile, when the transmission ratio of the sector bevel gear 29 to the first bevel gear 28 is greater than 11.67, the number of times of locking or unlocking completed by the electronic lock within one minute is less than 40, and the response speed is too slow to be qualified. Therefore, the inventor selects the transmission ratio of the sector bevel gear 29 to the first bevel gear 28 to be in the range of 1 to 11.67. As can be found from the above tests, when the transmission ratio of the sector bevel gear 29 to the first bevel gear 28 is 2.33, the transmission is optimal.

Optionally, an output power of the driving unit 1 is in the range of 0.5 W to 16 W.

Specifically, the output power of the driving unit 1 is in the range of 0.5 W to 16 W. The output power of the driving unit 1 determines a working speed of the electronic lock. As the power increases, the electronic lock completes a work more quickly; and as the power decreases, the electronic lock completes a work more slowly and even the locking of the locking rod 4 cannot be completed. To test the influence of the output power on the working of electronic lock, the inventor carries out relevant tests. The test method is to select the drive units 1 with different output power, and other structures of the electronic lock are the same. Each drive unit 1 works continuously for one minute, and the number of times the electronic lock completes the work is recorded, which is qualified when greater than or equal to 40 and unqualified when less than 40. It is also considered unqualified when there is abnormal sound during the working of the electronic lock. The results are shown in FIG. 14. After the output power of the driving unit 1 is less than 1 W, the number of times of locking or unlocking completed by the electronic lock within one minute is less than 40, so that the speed is too slow to be qualified. Thus, the inventor selects the minimum power of the driving unit 1 to be 0.5 W. When the output power of the driving unit 1 is greater than 16 W, due to the influence of the overall design, the speed of the electronic lock is in a bottleneck period without obvious improvement, and abnormal sound may occur at the same time. Thus, the inventor selects the output power of the driving unit 1 to be in the range of 0.5 W to 16 W, which specifically may be 0.5 W, 1 W, 2 W, 3 W, 5 W, 8 W, 10 W, 12 W, 13 W, 15 W, 16 W, etc.

Next, the working principle of the double-lock-rod electronic lock of the present disclosure is described in detail with reference to the drawings. When the first locking rod 3 locks, the rotation direction of the electric motor is temporarily set as a forward rotation. When the electric motor starts, the output shaft thereof drives the driving gear 11 to rotate forward; the driving gear 11 drives the second bevel gear 12 meshed therewith to rotate, and the second bevel gear 12 drives the first bevel gear 28 to rotate; the sector bevel gear 29 meshes with the first bevel gear 28 to achieve the rotation of the rotating shaft 24, so that the first swing arm 22 rotates in a direction in which the first locking rod 3 extends, thereby driving the first locking rod 3 to extend and achieve locking. When the first locking rod 3 needs to unlock, the electric motor rotates reversely, so that the first locking rod 3 returns to the initial position. When the second locking rod 4 needs to lock, the electric motor continues to rotates reversely, and the driving gear 11 drives the first bevel gear 28 to rotate through the second bevel gear 12, so that the second swing arm 23 drives the second locking rod 4 to extend and achieve locking. When the second locking rod 4 needs to unlock, the electric motor rotates forward to unlock of the second locking rod 4.

Although some specific embodiments of the present disclosure have been described in detail through examples, those skilled in the art should understand that the above examples are only for illustration and are not intended to limit the scope of the present disclosure. It should be understood by those skilled in the art that the above embodiments can be modified without departing from the scope and the principle of the present disclosure, and the scope of the present disclosure is defined by the appended claims.

## Claims

1. A double-lock-rod electronic lock, comprising a driving unit, a transmission mechanism, a first locking rod and a second locking rod; wherein
an output end of the driving unit is connected to an input end of the transmission mechanism;
the transmission mechanism comprises a fixed shaft and a swing arm assembly rotatably connected around the fixed shaft, and the driving unit drives the swing arm assembly to perform reciprocating rotational swing; and the swing arm assembly comprises a first swing arm and a second swing arm which are disposed opposite to each other, the first swing arm is connected to the first locking rod, and the second swing arm is connected to the second locking rod; and
the transmission mechanism is configured to be driven by the driving unit to cause the first locking rod and the second locking rod to move in opposite directions along their respective predetermined movement paths.

2. The double-lock-rod electronic lock according to claim 1, wherein the first locking rod and the second locking rod are disposed in parallel, and an axis of the fixed shaft is perpendicular to axes of the first locking rod and the second locking rod.

3. The double-lock-rod electronic lock according to claim 1, wherein extension directions of the first swing arm and the second swing arm are both perpendicular to an axis of the fixed shaft.

4. The double-lock-rod electronic lock according to claim 1, wherein the first locking rod comprises a first engagement recess, the second locking rod comprises a second engagement recess; and the first swing arm abuts against the first engagement recess to drive the first locking rod to move, and the second swing arm abuts against the second engagement recess to drive the second locking rod to move.

5. The double-lock-rod electronic lock according to claim 1, wherein the first swing arm and the second swing arm are positioned at an angle to each other, with an included angle greater than 90°therebetween.

6. The double-lock-rod electronic lock according to claim 1, wherein the first swing arm is located in a first plane, the second swing arm is located in a second plane, and the second plane is parallel to the first plane.

7. The double-lock-rod electronic lock according to claim 1, wherein the first swing arm is located in a first plane, and the second swing arm is located in a second plane, and the second plane is intersected with the first plane.

8. The double-lock-rod electronic lock according to claim 1, wherein the first swing arm and/or the second swing arm is provided with at least one bent portion.

9. The double-lock-rod electronic lock according to claim 1, wherein the first swing arm and the second swing arm have an equal length.

10. The double-lock-rod electronic lock according to claim 1, wherein a ratio of a perpendicular distance from a connection point between the first swing arm and the first locking rod to an axis of the fixed shaft, to a perpendicular distance from a connection point between the second swing arm and the second locking rod to the axis of the fixed shaft is in the range of 2/1 to 1/2.

11. The double-lock-rod electronic lock according to claim 1, wherein each of the first swing arm and the second swing arm is provided with a groove extending along an axial direction thereof.

12. The double-lock-rod electronic lock according to claim 1, further comprising a housing, which comprises a lower shell and an upper cover; the fixed shaft is fixedly disposed on a bottom wall of the housing, and the upper cover is provided with a limiting column at a position corresponding to the fixed shaft; the swing arm assembly further comprises a rotating shaft connecting the first swing arm and the second swing arm, and the rotating shaft is sleeved over the fixed shaft and limited by the limiting column.

13. The double-lock-rod electronic lock according to claim 12, wherein the input end of the transmission mechanism is a first bevel gear connected to the output end of the driving unit; the rotating shaft is provided with a sector bevel gear meshed with the first bevel gear, and the driving unit drives the first bevel gear to rotate, thereby driving the rotating shaft to rotate.

14. The double-lock-rod electronic lock according to claim 13, wherein an outer contour of the rotating shaft is provided with a step, and a non-toothed end of the sector bevel gear abuts against a surface of the step.

15. The double-lock-rod electronic lock according to claim 13, wherein an included angle between two side edges of the sector bevel gear is greater than or equal to 120°.

16. The double-lock-rod electronic lock according to claim 13, wherein the first bevel gear further comprises a spline shaft, which is disposed at a major diameter end of the first bevel gear.

17. The double-lock-rod electronic lock according to claim 16, wherein the output end of the driving unit is constructed as a gear assembly detachably connected to the spline shaft.

18. The double-lock-rod electronic lock according to claim 17, wherein the gear assembly comprises a driving gear and a second bevel gear meshed with the driving gear; a major diameter end of the second bevel gear is provided with a connection shaft extending along an axial direction of the second bevel gear, and a center of the connection shaft is provided with a spline hole matched with and connected to the spline shaft.

19. The double-lock-rod electronic lock according to claim 17, wherein the gear assembly comprises a driving gear, an output gear connected to the first bevel gear, and at least one transmission gear provided between the driving gear and the output gear.

20. The double-lock-rod electronic lock according to claim 12, wherein a sidewall of the lower shell away from the driving unit is provided with a first hole and a second hole, the first locking rod at least partially passes through the first hole, and the second locking rod at least partially passes through the second hole.

21. The double-lock-rod electronic lock according to claim 20, wherein a first sealing ring is provided between the first locking rod and the first hole, and a second sealing ring is provided between the second locking rod and the second hole.

22. The double-lock-rod electronic lock according to claim 12, further comprising an unlocking device, a contact face of which with the first swing arm and/or the second swing arm is an unlocking surface, and the unlocking device is configured such that the unlocking surface abuts against the first swing arm and/or the second swing arm under an external force, so as to reset the first swing arm and/or the second swing arm, and then reset the first locking rod and the second locking rod to initial positions thereof.

23. The double-lock-rod electronic lock according to claim 22, wherein the unlocking device comprises a pressing portion disposed outside the lower shell and an unlocking portion disposed inside the lower shell; the unlocking portion is configured to move reciprocatingly in a direction perpendicular to an axis of the fixed shaft; when the unlocking device is in an initial state, a first predetermined distance exists between the unlocking surface and a contact face of the first swing arm and/or the second swing arm at its initial position, and the first predetermined distance is greater than or equal to a preset moving distance of each of the first locking rod and the second locking rod.

24. The double-lock-rod electronic lock according to claim 23, wherein the unlocking portion comprises a first unlocking arm and a second unlocking arm, which are disposed to face the first swinging arm and the second swinging arm, respectively; the unlocking surface comprises a first unlocking surface and a second unlocking surface; an end face of the first unlocking arm is configured as the first unlocking surface, and an end face of the second unlocking arm is configured as the second unlocking surface; the first unlocking arm is configured to push the first swing arm, and the second unlocking arm is configured to push the second swing arm.

25. The double-lock-rod electronic lock according to claim 24, wherein in a state that the first locking rod or the second locking rod moves to a maximum preset moving distance along the predetermined movement path, there is a second distance from the first unlocking surface to the contact face of the first swing arm or from the second unlocking surface to the contact face of the second swing arm, and the second distance is greater than or equal to 0.

26. The double-lock-rod electronic lock according to claim 25, wherein when the unlocking device is in an unlocking state, the first unlocking surface and the second unlocking surface are in contact with the first swing arm and the second swing arm simultaneously.

27. The double-lock-rod electronic lock according to claim 24, wherein a third distance between an extension end of the first unlocking arm and an extension end of the second unlocking arm is less than a distance between an axis of the first locking rod and an axis of the second locking rod.

28. The double-lock-rod electronic lock according to claim 27, wherein the third distance is equal to a distance from a midpoint of the first swing arm to a midpoint of the second swing arm.

29. The double-lock-rod electronic lock according to claim 23, wherein a third sealing ring is provided between the unlocking portion and the lower shell.

30. The double-lock-rod electronic lock according to claim 4, wherein a material for the first locking rod and the second locking rod is different from that for the first engagement recess and the second engagement recess.

31. The double-lock-rod electronic lock according to claim 30, wherein the material of the first locking rod and the second locking rod is one selected from SUS 304, 45# steel, 40 Cr, and 65 Mn.

32. The double-lock-rod electronic lock according to claim 30, wherein the material of the first engagement recess and the second engagement recess is one selected from Polyoxymethylene, PA-GF 15, PA6-GF 30, and Polybutylene Terephthalate + Acrylonitrile Styrene Acrylate blend with 30% GF.

33. The double-lock-rod electronic lock according to claim 13, wherein a transmission ratio of the sector bevel gear to the first bevel gear is in the range of 1 to 11.67.

34. The double-lock-rod electronic lock according to claim 1, wherein an output power of the driving unit is in the range of 0.5 W to 16 W.
